# EUROPÄISCHE PATENTANMELDUNG

(11) **EP 2 394 722 A1**
(43) Veröffentlichungstag der Anmeldung: **14.12.2011**
(21) Anmeldenummer: 10165185.9
(22) Anmeldetag: 08.06.2010
(51) Int. Cl.: B01D 1/22, C08G 18/63, C08F 283/06

(54) **Verfahren zum Aufreinigen von Polyol-Dispersionen**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft ein Verfahren zum Aufreinigen einer Polyol-Dispersion durch Strippen über mindestens einen rotierenden Körper, die durch das erfindungsgemäße Verfahren erhältliche Polyoldispersion sowie deren Verwendung zur Herstellung von Polyurethanen.

## Beschreibung

### Einführung

Die vorliegende Erfindung betrifft ein Verfahren zum Aufreinigen einer Polyol-Dispersion durch Strippen über mindestens einen rotierenden Körper, die durch das erfindungsgemäße Verfahren erhaltene Polyoldispersion sowie deren Verwendung zur Herstellung von Polyurethanen.

### Hintergrund

Polyol-Dispersionen umfassen eine kontinuierliche Phase (flüssig bei 25°C, 1013 mbar) und eine feste Phase, die in der kontinuierlichen Phase dispergiert ist.

Dabei umfasst die kontinuierliche Phase mindestens ein Polyol, und optional weitere Komponenten, wie zum Beispiel zusätzlich ein Polyisobuten. Polyole im Sinne dieser Erfindung sind alle Verbindungen, die mindestens zwei Alkoholgruppen aufweisen.

Die dispergierte feste Phase umfasst mindestens einen Füllstoff; die Füllstoffe sind dabei bevorzugt ausgewählt aus polymeren, organischen oder anorganischen Füllstoffen, oder einer Mischung daraus.

Graft-Polyole sind eine spezielle Art von Polyoldispersionen. Bei Graft-Polyolen sind die Füllstoffe ausgewählt aus polymeren Füllstoffen, insbesondere aus Copolymeren von Styrol mit Acrylnitril.

In dem vorliegenden Text sind die Begriffe "Graft-Polyole", "Polymerpolyole" und "polymergefüllte Polyole" als äquivalent anzusehen.

Graft-Polyole werden in der Polyurethan (PU)-Industrie als Rohstoff eingesetzt, um die Härte-und die Elastizitätseigenschaften in PU-Weichschaumstoffen einzustellen. Es handelt sich hierbei in der Regel um Polyetherole (kontinuierliche Phase), die gefüllt sind mit einem Copolymer aus Styrol und Acrylnitril (Füllstoff, feste Phase). Beim Herstellprozess dieser Produkte wird in der Regel Styrol und Acrylnitril im Polyetherol in Gegenwart eines Makromonomers (auch Makromer genannt) polymerisiert (Stryrol-Acrylnitril-Polymer, SAN).

Das Makromer erfüllt die Funktion der sterischen Stabilisierung der sich bildenden SAN-Partikel und verhindert somit eine Agglomeration oder Ausflockung der SAN-Partikel. Ferner können durch die verwendete Menge an Makromer die Partikelgrößen gezielt eingestellt werden. Als Makromere werden üblicherweise mehrfunktionelle Polyetherole verwendet, die nachträglich mit einer ungesättigen Bindung versehen wurden, die radikalisch mit den Monomeren polymerisiert werden kann.

Graft-Polyole werden nach der freien radikalischen Polymerisation der ungesättigten Monomere einem Reinigungsschritt unterzogen. Die Entfernung flüchtiger Verbindungen, z. B. verbliebene Monomere, flüchtige organische Verbindungen (FOV), Abbauprodukte, Nebenprodukte, Lösemittel, Wasser, Alkohole, Zusatzstoffe, Geruchs- und Emissionsstoffe, aus den Graft-Polyolen wird üblicherweise bei erhöhten Temperaturen unter Vakuum durchgeführt.

Das Aufreinigen bzw. Strippen von Polymerpolyolen (PMPOs) ist in "Chemistry and Technology of Polyols for Polyurethanes", Mihail lonescu, Rapra Technology Limited, 2005, S. 210-213 beschrieben. Es wurden das Strippen einer azeotropen Mischung aus Styrol und Wasser und das Strippen unter Vakuum in einem Gegenstromsystem (Dampfstrippen, Stickstoffstrippen) beschrieben. Das Gegenstromstrippen kann batchweise oder kontinuierlich unter Verwendung klassischer Säulen mit Böden erfolgen.

Das batchweise Vakuumstrippen von Graft-Polyesterolen wird in EP 0622384 beschrieben. Das batchweise Vakuumstrippen von Graft-Polyetherolen, die batchweise hergestellt werden, wird in EP 0664306 und EP 0353070 beschrieben, und das batchweise Vakuumstrippen von Graft-Polyetherolen, die kontinuierlich hergestellt werden, in WO 0000531 und WO 03097710. Das kontinuierliche Strippen in gepackten Säulen unter Verwendung von Dampf als Strippmittel wird in US 020080033139 und EP 1873170 offenbart.

Styrol und viele andere Verbindungen erzeugen selbst in geringen Mengen einen unangenehmen Geruch und/oder unerwünschte Emissionen und müssen daher spätestens im Endprodukt möglichst vollständig entfernt werden.

Während des üblichen Strippvorgangs werden die Graft-Polyole lange Zeit hohen Temperaturen ausgesetzt, was u. a. die folgenden Probleme verursachen kann:
Die Qualität der Dispersion wird aufgrund von thermischen Veränderungen der Polymerstrukturen wie Abbaureaktionen, Depolymerisation, Quervernetzung von Polymerpartikeln verschlechtert; z. B. kann es zu Phasentrennung, Viskositätserhöhung infolge Quervernetzung, schlechteren Filtrationseigenschaften, Farb- und Geruchtsentwicklung kommen.

Zudem kann meist nur durch sehr lange Strippzeiten ein gewünschter niedriger Gehalt an flüchtigen Verbindungen erreicht werden. Die lange Strippzeit führt wiederum zu Engpässen in der Produktion und somit zur Verringerung der Produktionskapazität.

Die erwähnten Probleme konnten durch die bisher bekannten Strippverfahren nicht ausgeräumt werden.

Die Aufgabe bestand folglich darin, ein flexibles, einfaches und ökonomisches Verfahren zum Strippen von Polyol-Dispersionen bereitzustellen, welches lange Exposition der Dispersionen gegenüber hohen Temperaturen vermeidet und eine gute und reproduzierbare Produktqualität liefert.

### Beschreibung der Erfindung

Es wurde nun überraschenderweise gefunden, dass die oben erwähnte Aufgabe durch ein Verfahren zum Aufreinigen von Polyol-Dispersionen, umfassend mindestens ein Polyol und mindestens einen Füllstoff, dadurch gekennzeichnet, dass die Polyol-Dispersionen über mindestens einen rotierenden Körper gestrippt werden, gelöst werden können.

Der Gegenstand der vorliegenden Erfindung ist somit ein Verfahren zum Aufreinigen einer Polyol-Dispersion, umfassend mindestens ein Polyol und mindestens einen Füllstoff, dadurch gekennzeichnet, dass die Polyol-Dispersion über mindestens einen rotierenden Körper gestrippt wird.

Weitere Gegenstände der vorliegenden Erfindung sind auch eine Polyoldispersion, erhältlich durch das erfindungsgemäße Verfahren, die Verwendung der nach dem erfindungsgemäßen Verfahren herstellbaren Polyoldispersion zur Herstellung von Polyurethanen sowie ein Polyurethan, das unter Verwendung der erfindungsgemäß herstellbaren Polyoldispersion erhältlich ist.

Es wird somit mit der vorliegenden Erfindung ein prozessual flexibles und wirtschaftliches Verfahren zur Aufreinigung von Polyoldispersionen bereitgestellt.

Nach Durchlaufen des erfindungsgemäßen Verfahrens enthält eine Polyoldispersion in der Regel einen deutlich geringeren Anteil flüchtiger Verbindungen als vor Beginn des erfindungsgemäßen Verfahrens. Zudem liegt der Gehalt flüchtiger Verbindungen nach Durchlaufen des erfindungsgemäßen Verfahrens in der Regel auch nicht höher als nach dem Durchlaufen eines konventionellen Reinigungsverfahrens.

Die weiteren Produkteigenschaften einer Polyoldispersion, wie zum Beispiel die Form und Größe der in der Polyoldispersion enthaltenen Partikel, bleiben nach Durchlaufen des erfindungsgemäßen Verfahrens in der Regel erhalten.

Mindestens einer der rotierenden Köper kann als Drehscheibe vorliegen und kann scheiben-, vasen-, ring- oder kegelförmig ausgeführt werden, wobei eine waagrechte oder eine von der Waagrechten um bis zu 45°C abweichende Drehscheibe als bevorzugt anzusehen ist. Bevorzugt liegen alle rotierenden Körper als Drehscheiben vor.

Normalerweise weisen die rotierenden Körper jeweils einen Durchmesser von 0,10 m bis 3,0 m, bevorzugt 0,20 m bis 2,0 m und besonders bevorzugt von 0,20 m bis 1,0 m auf. Die Oberfläche kann glatt sein oder beispielsweise riffel- oder spiralförmige Einformungen aufweisen, welche Einfluss auf die Durchmischung und die Verweilzeit des Reaktionsgemischs ausüben.

Die Drehgeschwindigkeit des Körpers sowie die Dosierungsrate der Mischung sind variabel. Üblicherweise beträgt die Umdrehungsgeschwindigkeit in Umdrehungen pro Minute 1 bis 20000, bevorzugt 100 bis 5000 und besonders bevorzugt 200 bis 2000.

Das Volumen des Reaktionsgemischs, welches sich pro Flächeneinheit der Oberfläche auf dem rotierenden Körper befindet, beträgt typischerweise 0,03 bis 40 mL/(dm²), bevorzugt 0,1 bis 10 mL/(dm²), besonders bevorzugt 1,0 bis 5,0 mL/(dm²).

Die durchschnittliche Verweilzeit (Häufigkeitsmittel des Verweilzeitspektrums) der Inhaltsstoffe der Mischung auf der Oberfläche eines der rotierenden Körper ist u. a. von der Größe der Oberfläche, von der Art der organischen Verbindung und der enthaltenen Menge an Wasser, von der Temperatur der Oberfläche sowie von der Umdrehungsgeschwindigkeit des rotierenden Körpers A abhängig. Sie beträgt normalerweise zwischen 0,01 und 60 Sekunden, bevorzugt zwischen 0,1 und 30 Sekunden, insbesondere 0,5 bis 20 Sekunden und ist somit als ausgesprochen kurz anzusehen. Dies gewährleistet, dass das Ausmaß von möglichen Zersetzungsreaktionen und die Bildung unerwünschter Produkte stark reduziert wird und somit die Qualität der Substrate erhalten bleibt.

Bevorzugt beträgt die durchschnittliche Verweilzeit der Inhaltsstoffe der Mischung auf der Oberfläche auf allen rotierenden Körpern jeweils zwischen 0,01 und 60 Sekunden, bevorzugt zwischen 0,1 und 30 Sekunden, insbesondere 0,5 bis 20 Sekunden.

Mindestens einer der rotierenden Körper ist vorzugsweise in einem Container oder Gehäuse, insbesondere in einem bezüglich der Bedingungen des erfindungsgemäßen Verfahrens beständigen Container oder Gehäuse, platziert. Insbesondere bevorzugt sind allen rotierenden Körper in jeweils einem Gehäuse platziert, oder es sind alle rotierenden Körper in ein und demselben Gehäuse platziert. Ein rotierender Körper bildet zusammen mit dem Gehäuse, und ggf. den weiteren im selben Gehäuse enthaltenen rotierenden Körpern, einen Reaktor.

Das erfindungsgemäße Verfahren kann bei Normaldruck oder leichtem Überdruck und in einer Atmosphäre von trockenem Schutzgas durchgeführt werden. Es kann aber auch zweckmäßig sein, ein Vakuum zu erzeugen, wobei sich Drücke im jeweiligen Gehäuse zwischen 0,001 mbar und 1100 mbar, bevorzugt zwischen 0,01 mbar und 500 mbar, besonders bevorzugt zwischen 0,1 mbar und 100 mbar als vorteilhaft erwiesen haben.

Eine bevorzugte Ausführungsform der vorliegenden Erfindung sieht weiterhin vor, dass Dampf, zum Beispiel Wasserdampf, ein Gas, zum Beispiel trockene Luft und/oder Inertgas, bevorzugt Stickstoff, zur Verbesserung der Entfernung flüchtiger Komponenten eingesetzt wird.

In einer bevorzugten Ausführungsform liegt die Mischung auf der Oberfläche mindestens eines der rotierenden Körper in Form eines Films vor, der eine durchschnittliche Schichtdicke zwischen 0,1 µm und 20,0 mm, bevorzugt zwischen 1 µm und 10 mm und besonders bevorzugt zwischen 10 µm und 2 mm, aufweist. Besonders bevorzugt liegt die Mischung auf der Oberfläche aller rotierenden Körper jeweils in Form eines Films vor, der eine durchschnittliche Schichtdicke zwischen 0,1 µm und 20,0 mm, bevorzugt zwischen 1 µm und 10 mm und besonders bevorzugt zwischen 10 µm und 2 mm

Die Temperatur mindestens eines rotierenden Körpers beträgt in der Regel zwischen 20 und 400 °C, bevorzugt zwischen 80 und 300°C und besonders bevorzugt zwischen 100 und 270°C. Bevorzugt beträgt die Temperatur aller rotierenden Körper jeweils zwischen 20 und 400 °C, insbesondere zwischen 80 und 300°C und besonders bevorzugt zwischen 100 und 270°C.

In einer Ausführungsform der Erfindung ist mindestens einer der rotierenden Körper in einem Gehäuse platziert, dessen Wandinnentemperatur zwischen 0 und 300 °C, bevorzugt zwischen 10 und 250°C und besonders bevorzugt zwischen 20°C und 100 °C beträgt, wobei die Wandtemperatur vorzugsweise niedriger ist als die Temperatur des rotierenden Körpers. Besonders bevorzugt sind alle rotierenden Körper in jeweils einem oder in dem selben Gehäuse platziert, wobei dessen bzw. deren Wandinnentemperatur jeweils zwischen 0 und 300 °C, bevorzugt zwischen 10 und 250°C und besonders bevorzugt zwischen 20°C und 100 °C beträgt, wobei die jeweilige Wandinnentemperatur vorzugsweise niedriger ist als die Temperatur des jeweiligen rotierenden Körpers.

In einer weiteren Ausführungsform des erfindungsgemäßen Verfahrens wird der Reaktor isotherm betrieben, d. h. mindestens einer der rotierenden Körper, vorzugsweise in Form einer Schreibe, sowie ggf. die weiteren im selben Gehäuse enthaltenen rotierenden Körper, bevorzugt ebenfalls jeweils in Form einer Scheibe, und die Innenwand des Gehäuses haben die gleiche Temperatur.

Das Produkt wird dann sowohl auf den im Gehäuse enthaltenen rotierenden Körpern, bevorzugt jeweils in Form einer oder mehrerer übereinander liegender Scheiben, als auch an der Innenwand des Gehäuses entgast. Die Abkühlung findet dann bevorzugt in einem nachgeschalteten Wärmetauscher statt.

Zu einer effektiven Aufreinigung kann es auch zweckmäßig sein, die Mischung mehrfach über die Oberfläche eines rotierenden Körpers zu leiten.

In einer weiteren Ausführungsform der Erfindung erstreckt sich die Oberfläche auf weitere rotierende Körper, so dass die Mischung von der Oberfläche eines rotierenden Körpers auf die Oberfläche mindestens eines weiteren rotierenden Körpers gelangt.

Typischerweise füttert dann ein rotierender Körper die weiteren Körper mit dem Reaktionsgemisch. Alternativ fließt das Reaktionsgemisch von einem rotierenden Körper auf den nächsten. Bevorzugt werden bis zu 10 parallel oder in Reihe geschaltete rotierende Körper verwendet. Bei dieser Ausführungsform wird der Reaktor isotherm betrieben.

In einer Ausführungsform des erfindungsgemäßen Verfahrens werden mindestens zwei rotierende Körper verwendet, wobei die mindestens zwei rotierenden Körper in Reihe oder parallel eingesetzt werden.

Die gesamte durchschnittliche Verweilzeit der Inhaltsstoffe der Mischung auf der Oberfläche aller rotierenden Körper beträgt, bei mehr als einem rotierenden Körper, bevorzugt von 10 Sekunden bis 2 Minuten.

Wie oben bereits erwähnt, umfassen die zu reinigenden Polyol-Dispersionen eine kontinuierliche Phase (flüssig) und eine feste Phase, die in der kontinuierlichen Phase dispergiert ist.

Die kontinuierliche Phase umfasst mindestens ein Polyol, und optional weitere Komponenten.

Die in der Polyoldispersion enthaltenen Polyole sind bevorzugt ausgewählt aus den Familien der Polyetherpolyole, Polyesterpolyole, Polyether-Polyester-Polyole, Polycarbonat-Polyole, Poly-THF-Polyole, und Mischungen daraus, wobei Polyetherpolyole besonders bevorzugt sind.

Die Polyetherpolyole weisen dabei bevorzugt ein Molekulargewicht (Mn) von 300 - 20000 g/mol, bevorzugt 400-6000 g/mol und/oder bevorzugt eine OH-Zahl von 20 - 900 mg KOH/g, besonders bevorzugt 25-500 mg KOH/g auf.

Die feste Phase der Polyol-Dispersion umfasst, wie erwähnt, Füllstoffe. Die Füllstoffe sind bevorzugt ausgewählt aus polymeren, organischen oder anorganischen Füllstoffen, oder einer Mischung daraus.

Zum Beispiel können die Füllstoffe ausgewählt sein aus der Gruppe umfassend Polystyrol, Poly-(Styrol-co-Acrylnitril), Polyacrylnitril, Polyacrylat, Polymethacrylat, Polyolefine, wie z. B. Polypropylen, Polyethylen, Polyisobutylen, Polybutadien, Polyester, Polyamid, Polyvinylchlorid, Polyethylenterephthalat, Polyethylenglycol, Schwefel, Phosphor, Silikat-Materialien (wie z. B. Silica-Nanopartikel), Metalloxide, Metallcarbonate, anorganische Salze, anorganische Pigmente, Kohlenstoff (wie z. B. Graphit, Nano-Röhren, Fasern), Melamin, Harnstoff, Cellulose (wie z. B. Fasern, Nanopartikel, kristalline Cellulose), oder Mischungen daraus.

In einer Ausführungsform beträgt die mittlere Partikelgröße der Füllstoffe von 0,05 µm - 500 µm, bevorzugt von 0,1 µm - 50 µm.

Die Verteilung der Füllstoffe kann monomodal, bimodal oder multimodal sein.

Die Füllstoffe können untereinander vermischt werden. Die Menge der Füllstoffe, bezogen auf den Gesamtansatz, beträgt bevorzugt zwischen 1 und 70 Gew.-%, besonders bevorzugt zwischen 5 und 55 Gew.-%.

In einer Ausführungsform weist die Polyol-Dispersion nach dem letzten Verfahrensschritt des erfindungsgemäßen Verfahrens einen Gehalt flüchtiger, insbesondere organischer, Substanzen von < 500 ppm, bevorzugt von < 50 ppm auf. Bevorzugt weist die Polyol-Dispersion nach Durchlaufen des erfindungsgemäßen Verfahrens einen Gehalt an Styrol von < 10 ppm auf.

Die vorliegende Erfindung richtet sich auch auf Polyoldispersionen, die durch das erfindungsgemäße Verfahren erhältlich sind.

Die nach dem erfindungsgemäßen Verfahren erhältlichen Polyol-Dispersionen können zur Herstellung von Polyurethanen verwendet werden. Die so erhältlichen Polyurethane sind ebenfalls ein Gegenstand der vorliegenden Erfindung.

Die auf diese Weise hergestellten Polyurethane können zum Beispiel Hart- oder Weichschaumpolyurethane sein. Insbesondere bei Anwendungen, bei denen eine geringe Emission flüchtiger Substanzen von Bedeutung ist, können die erfindungsgemäß hergestellten Polyurethane vorteilhaft eingesetzt werden. Als Beispiele können der Einsatz erfindungsgemäß hergestellter Polyurethane als Grundstoff von Matratzen oder im Automobilbau genannt werden.

Ein weiterer Gegenstand der Erfindung ist somit ein Verfahren zur Herstellung eines Polyurethans durch Umsetzung einer nach dem erfindungsgemäßen Verfahren. herstellbaren bzw. aufreinigbaren Polyoldispersion mit einem oder mehreren organischen Diisocyanaten (oder Polyisocyanaten).

Die Herstellung der Polyurethane kann nach den bekannten Verfahren, diskontinuierlich oder kontinuierlich, beispielsweise mit Reaktionsextrudern oder dem Bandverfahren nach "one-shot" oder dem Prepolymerverfahren (auch mehrstufige Prepolymerverfahren wie in US6790916B2, bevorzugt nach dem "one-shof"-Verfahren erfolgen. Bei diesen Verfahren können die zur Reaktion kommenden Komponenten Polyol, Kettenverlängerer, Isocyanat und gegebenenfalls Hilfsstoffe und Additive (insbesondere UV-Stabilisatoren) nacheinander oder gleichzeitig miteinander vermischt werden, wobei die Reaktion unmittelbar einsetzt.

Die Herstellung der Polyurethane erfolgt in der Regel durch Umsetzung von Diisocyanaten mit Verbindungen mit mindestens zwei mit Isocyanatgruppen reaktiven Wasserstoffatomen, vorzugsweise difunktionellen Alkoholen, besonders bevorzugt mit den erfindungsgemäß herstellbaren bzw. aufreinigbaren Polyoldispersionen.

Als Diisocyanate werden übliche aromatische, aliphatische und/oder cycloaliphatische Diisocyanate, beispielsweise Diphenyl-Methan-Diisocyanat (MDI), Toluylendiisocyanat (TDI), Tri-, Tetra-, Penta-, Hexa-, Hepta- und/oder Oktamethylendiisocyanat, 2-Methyl-pentamethylendiisocyanat-1,5, 2-Ethyl-butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder-2,6-cyclohexan-diisocyanat, 4,4'-, 2,4'- und/oder 2,2'-Dicyclo-hexylmethan-diisocyanat eingesetzt. Als gegenüber Isocyanaten reaktive Verbindungen werden, wie beschrieben, die erfindungsgemäß herstellbaren bzw. aufreinigbaren Polyoldispersionen eingesetzt. In Gemisch mit diesen können allgemein bekannte Polyhydroxylverbindungen mit Molekulargewichten (Mn) von 500 bis 8000 g/mol, bevorzugt 600 bis 6000 g/mol, und bevorzugt einer mittleren Funktionalität von 1,8 bis 8, bevorzugt 1,9 bis 6, insbesondere 2 eingesetzt werden, beispielsweise Polyesteralkohole, Polyetheralkohole und/oder Polycarbonatdiole.

Zu den gegenüber Isocyanaten reaktiven Verbindungen gehören auch die Kettenverlängerungsmittel. Als Kettenverlängerungsmittel können allgemein bekannte insbesondere zweifunktionelle Verbindungen eingesetzt werden, beispielsweise Diamine und/ oder Alkandiole mit 2 bis 10 C-Atomen im Alkylenrest, insbesondere Ethylenglykol und/ oder Butandiol-1,4, und/oder Hexandiol und/ oder Di- und/ oder Tri-oxyalkylen-glykole mit 3 bis 8 Kohlenstoffatomen im Oxyalkylenrest, bevorzugt entsprechende Oligo-Polyoxypropylenglykole, wobei auch Mischungen der Kettenverlängerer eingesetzt werden können. Als Kettenverlängerer können auch 1,4-Bis-(hydroxymethyl)-benzol (1,4-BHMB), 1,4-Bis-(hydroxyethyl)-benzol (1,4-BHEB) oder 1,4-Bis-(2-hydroxyethoxy)-benzol (1,4-HQEE) zum Einsatz kommen. Bevorzugt werden als Kettenverlängerer Ethylenglykol und Hexandiol, besonders bevorzugt Ethylenglykol.

Üblicherweise werden Katalysatoren eingesetzt, welche die Reaktion zwischen den NCO-Gruppen der Diisocyanate und den Hydroxylgruppen der Aufbaukomponenten beschleunigen, beispielsweise tertiäre Amine, wie Triethylamin, Dimethylcyclohexyl-amin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)- acetylacetonat, Zinnverbindungen, wie Zinndiacetat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung eingesetzt.

Neben Katalysatoren können den Aufbaukomponenten auch übliche Hilfsstoffe hinzugefügt werden. Genannt seien beispielsweise oberflächenaktive Substanzen, Flammschutzmittel, Keimbildungsmittel, Gleit- und Entformungshilfen, Farbstoffe und Pigmente, Inhibitoren, Stabilisatoren gegen Hydrolyse, Licht, Hitze, Oxidation oder Verfärbung, Schutzmittel gegen mikrobiellen Abbau, anorganische und/ oder organische Füllstoffe, Verstärkungsmittel und Weichmacher.

Nähere Angaben über die oben genannten Hilfsmittel- und Zusatzstoffe sind der Fachliteratur zu entnehmen, zum Beispiel aus "Plastics Additive Handbook", 5th Edition, H. Zweifel, ed, Hanser Publishers, München, 2001, H. Saunders und K. C. Frisch "High Polymers", Band XVI, Polyurethane, Teil 1 und 2, Verlag Interscience Publishers 1962 and 1964, Taschenbuch für Kunststoff-Additive von R. Gachter und H. Muller (Hanser Verlag München 1990) oder DE-A 29 01 774.

Apparaturen zur Herstellung von Polyurethanen sind dem Fachmann bekannt; siehe zum Beispiel Kunststoffhandbuch, Band VII, Polyurethane, Carl- Hanser-Verlag, München 1. Auflage 1966, herausgegeben von Dr. R Vieweg und Dr. A. Höchtlen, sowie 2. Auflage 1983 und die 3. neubearbeitete Auflage 1993, herausgegeben von Dr. G. Oertel.

### Abbildungen

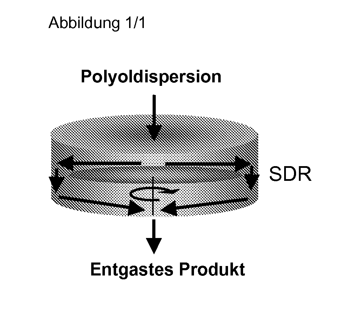

Abbildung 1 stellt eine beispielhafte Ausführungsform eines rotierenden Körpers dar, wie er im erfindungsgemäßen Verfahren Anwendung finden kann. Hierbei steht die Abkürzung SDR für "Spinning disc reactor" (rotierende Scheibe-Reaktor).

Dargestellt ist eine in einem Container platzierte rotierende Scheibe, die von oben konitinuierlich mit Polyoldispersion gespeist wird. Das entgaste Produkt wird an der Wand abgekühlt und am Boden abgelassen.

### Beispiele

Im Folgenden sollen einige Beispiele zur Erläuterung der Erfindung dargestellt werden. Keinesfalls sollen diese Beispiele den Schutzumfang der vorliegenden Erfindung einschränken; sie sind nur illustrierend zu verstehen.

In allen Beispielen wurde eine modifizierte Version eines Reaktors verwendet, der in den Dokumenten WO00/48728, WO00/48729, WO00/48730, WO00/48731 und WO00/48732 beschrieben ist.

Der rotierende Körper war eine Scheibe mit 10 cm Durchmesser. Dieser Körper kann in einem Bereich von -5 °C bis +300 °C mit Flüssigkeit gekühlt oder geheizt werden und kann von 10 UpM (UpM = Umdrehungen pro Minute) bis zu 3000 UpM rotieren. Eine Zahnradpumpe kann die Ausgangsstoffe zudosieren.

Die Quencheinrichtung war eine metallische Wand, in welcher Kühlmittel fließt.

Die Ausgangsstoffe können in einem dem rotierenden Körper vorgeschalteten statischen Mischer-Wärmetauscher vorgewärmt werden.

In allen Beispielen wurde ein Graftpolyol folgender Zusammensetzung eingesetzt: Poly-(Styrol-co-Acrylnitril)dispersion (45% Feststoffgehalt) in Glycerin-gestartetem PO-reichen Polyetherpolyol (Mw 2800 g/mol, OH# 55 mg KOH/g).

### Beispiel 1: Entmonomerisierung in einer SDR-Kaskade - 3 Durchläufe

Der zu entfernende Restmonomergehalt betrug für Acrylnitril ca. 2300ppm und für Styrol ca. 4500ppm.

Das Graftpolyol wurde 3 mal über den selben Apparat gefahren, welcher eine rotierende Scheibe mit 10 cm Durchmesser enthielt. Dabei wurde die Scheibe von innen mit einem Heizmedium aufgeheizt. Das Heizmedium hatte eine Temperatur von ca. 250°C. Das Produkt wurde mit 15 ml/min über die Scheibe gefahren. Um die Entmonomerisierung zu unterstützen, wurde neben Vakuum, welches zwischen 0,6 und 2 mbar lag, ein Stickstoffstrom von 0,05 Normlitern/h über die Scheibe geleitet. In folgender Tabelle sind die Prozessbedingungen der 3 Durchläufe dargestellt:

**Tabelle 1: Prozessbedingungen für Beispiel 1**

| **Durchlauf** | **Druck** | **Zulauf** | **Zulauf-temperatur** | **Scheiben-temperatur** | **Mantel-temperatur** |
|---|---|---|---|---|---|
| | mbar | ml/min | °C | °C | °C |
| **1** | 1.45 | 15 | 67 | 247 | 59 |
| **2** | 0.77 | 15 | 67 | 247 | 59 |
| **3** | 0.68 | 15 | 66 | 247 | 59 |

Nach 3 Durchläufen konnte eine Abreicherung von Acrylnitril von 2300 ppm auf kleiner 10 ppm erreicht werden, wobei bereits nach 2 Durchläufen der Rest-Acrylnitrilgehalt kleiner als 10 ppm war. Styrol konnte von 4500 ppm auf 220 ppm abgereichert werden. In der folgenden Tabelle sind die Versuchsergebnisse zusammengefasst:

**Tabelle 2: Versuchsergebnisse aus Beispiel 1**

| **Probe** | **Styrol** ppm | **Acrylnitril** ppm |
|---|---|---|
| **Zulauf 1** | 4500 | 2300 |
| **Ergebniss 1= Zulauf 2** | 1000 | 160 |
| **Ergebniss 2 = Zulauf 3** | 430 | <10 |
| **Ergebniss 3** | 220 | <10 |

### Beispiel 2: Entmonomerisierung in einer SDR-Kaskade - 8 Durchläufe

Der zu entfernende Restmonomergehalt beträgt für Acrylnitril ca. 2400 ppm und für Styrol ca. 4600 ppm.

Um eine Abreicherung auf die Zielwerte zu erreichen, wird das Graftpolyol 8 mal über den selben Apparat gefahren, welcher eine rotierende Scheibe mit 10cm Durchmesser enthält. Dabei wird die Scheibe von innen mit einem Heizmedium aufgeheizt. Das Heizmedium hat eine Temperatur von ca. 250°C. Das Produkt wird mit 15 ml/min über die Scheibe gefahren. Um die Entmonomerisierung zu unterstützen, wird neben Vakuum, welches zwischen 0,5 und 2 mbar liegt, ein Stickstoffstrom von 0,05 Normlitern/h über die Scheibe geleitet. In folgender Tabelle sind die Prozessbedingungen der 8 Durchläufe dargestellt:

**Tabelle 3: Prozessbedingungen für Beispiel 2**

| **Durchlauf** | **Druck** | **Zulauf** | **Zulauf-temperatur** | **Scheiben-temperatur** | **Mantel-temperatur** |
|---|---|---|---|---|---|
| | mbar | ml/min | °C | °C | °C |
| **1** | 1.48 | 15 | 67 | 248 | 60 |
| **2** | 0.79 | 15 | 67 | 248 | 60 |
| **3** | 0.69 | 15 | 67 | 248 | 60 |
| **4** | 0.66 | 15 | 67 | 248 | 60 |
| **5** | 0.65 | 15 | 67 | 248 | 60 |
| **6** | 0.6 | 15 | 67 | 248 | 60 |
| **7** | 0.58 | 15 | 67 | 248 | 60 |
| **8** | 0.57 | 15 | 67 | 248 | 60 |

Nach 8 Durchläufen kann eine Abreicherung von Acrylnitril von 2400 ppm auf den Zielwert von < 5 ppm erreicht werden, wobei bereits nach 3 Durchläufen der Rest-Acrylnitrilgehalt kleiner als 5 ppm ist. Styrol kann nach 8 Durchläufen von 4600 ppm auf den Zielwert von <10 ppm abgereichert werden. In der folgenden Tabelle sind die Versuchsergebnisse zusammengefasst:

**Tabelle 4: Versuchsergebnisse aus Beispiel 2**

| **Probe** | **Styrol** | **Acrylnitril** |
|---|---|---|
| | ppm | ppm |
| **Zulauf 1** | 4600 | 2400 |
| **Ergebnis 1 = Zulauf 2** | 1100 | 180 |
| **Ergebnis 2 = Zulauf 3** | 440 | 8 |
| **Ergebnis 3 = Zulauf 4** | 200 | <5 |
| **Ergebnis 4 = Zulauf 5** | 110 | <5 |
| **Ergebnis 5 = Zulauf 6** | 50 | <5 |
| **Ergebnis 6 = Zulauf 7** | 26 | <5 |
| **Ergebnis 7 = Zulauf 8** | 16 | <5 |
| **Ergebnis 8** | <10 | <5 |

Wie aus den Beispielen ersichtlich wird, können die Graft-Polyole in sehr kurzer Strippzeit, im Sekunden- bis Minutenbereich, bis auf den gewünschten Gehalt an flüchtigen Komponenten abgereichert werden. Die kurze Strippzeit führt zu einer deutlich geringeren Beanspruchung der Graft-Polyole bei hohen Temperaturen. Das Auftreten thermischer Veränderungen der Polymerstrukturen wie Abbaureaktionen, Depolymerisationen, Quervernetzungen mit Folge von Viskositätserhöhungen sowie Farb- und Geruchsveränderungen kann deutlich reduziert werden.

Ein weiterer Vorteil des erfindungsgemäßen Verfahrens ist eine mögliche Erhöhung der Produktionskapazitäten, da der Strippvorgang häufig einen Engpass in der gesamten Produktionskette darstellt.

## Patentansprüche

1. Verfahren zum Aufreinigen einer Polyol-Dispersion, umfassend mindestens ein Polyol und mindestens einen Füllstoff, **dadurch gekennzeichnet, dass** die Polyol-Dispersion über mindestens einen rotierenden Körper gestrippt wird.

2. Verfahren nach Anspruch 1, wobei wenigstens einer der rotierenden Körper als eine Drehscheibe vorliegt.

3. Verfahren nach Anspruch 1 oder 2, wobei die Polyol-Dispersion auf der Oberfläche mindestens eines der rotierenden Körper in Form eines Films vorliegt, der eine durchschnittliche Schichtdicke zwischen 0,1 µm und 20,0 mm, bevorzugt zwischen 1 µm und 10 mm aufweist, und/oder wobei die durchschnittliche Verweilzeit der Inhaltsstoffe der Mischung auf der Oberfläche mindestens eines der rotierenden Körper zwischen 0,01 und 60 Sekunden, bevorzugt zwischen 0,1 und 30 Sekunden beträgt, und/oder wobei die Temperatur mindestens eines der rotierenden Körper zwischen 20 und 400 °C, bevorzugt zwischen 80 und 300 °C beträgt.

4. Verfahren nach einem der Ansprüche 1 bis 3, wobei mindestens zwei rotierende Körper verwendet werden, wobei die mindestens zwei rotierenden Körper in Reihe oder parallel verwendet werden.

5. Verfahren nach einem der Ansprüche 1 bis 4, wobei mindestens einer der rotierenden Körper in einem Gehäuse platziert ist.

6. Verfahren nach Anspruch 5, wobei der Druck im Gehäuse während des Verfahrens zwischen 0,001 mbar und 1100 mbar, bevorzugt zwischen 0,01 mbar und 500 mbar, besonders bevorzugt 0,1 bis 100 mbar beträgt.

7. Verfahren nach einem der Ansprüche 5 oder 6, wobei die Wandinnentemperatur des Gehäuses zwischen 0 und 300 °C, bevorzugt zwischen 10 und 250 °C und besonders bevorzugt zwischen 20 °C bis 100 °C beträgt.

8. Verfahren nach einem der Ansprüche 1 bis 7, wobei die in der Polyol-Dispersion enthaltenen Polyole ausgewählt sind aus den Familien der Polyetherpolyole, Polyesterpolyole, Polyether-Polyester-Polyole, Polycarbonat-Polyole oder Poly-THF-Polyole, oder Mischungen davon, bevorzugt aus der Familie der Polyetherpolyole.

9. Verfahren nach Anspruch 8, wobei die Polyetherpolyole ein Molekulargewicht von 300 - 20000 g/mol, bevorzugt von 400 - 6000 g/mol aufweisen, und/oder wobei die Polyetherpolyole eine OH-Zahl von 20 - 900 mg KOH/g, bevorzugt von 25 - 500 mg KOH/g aufweisen.

10. Verfahren nach einem der Ansprüche 1 bis 9, wobei die in der Poyol-Dispersion enthaltenen Füllstoffe ausgewählt sind aus polymeren, organischen oder anorganischen Füllstoffen, oder einer Mischung daraus.

11. Verfahren nach Anspruch 10, wobei die mittlere Partikelgröße der Füllstoffe von 0,05 µm - 500 µm, bevorzugt von 0,1 µm - 50 µm beträgt, und/oder wobei die Verteilung der Füllstoffe monomodal, bimodal oder multimodal ist.

12. Verfahren nach einem der Ansprüche 1 bis 11, wobei die Polyol-Dispersion nach dem letzten Verfahrensschritt einen Gehalt flüchtiger Substanzen von < 500 ppm, bevorzugt < 50 ppm aufweist.

13. Polyoldispersion, erhältlich durch das Verfahren nach einem der Ansprüche 1 bis 12.

14. Verwendung der Polyoldispersion gemäß Anspruch 13 zur Herstellung von Polyurethanen.

15. Polyurethane, erhältlich unter Verwendung von Polydispersionen gemäß Anspruch 13.
